# EUROPÄISCHE PATENTSCHRIFT

(11) **EP 1 291 251 B1**
(45) Veröffentlichungstag und Bekanntmachung des Hinweises auf die Patenterteilung: **11.07.2007**
(21) Anmeldenummer: 02019073.2
(22) Anmeldetag: 28.08.2002
(51) Int. Cl.: B60R 22/44, B60R 22/46

(54) **Gurtaufroller**
Seat belt retractor
Enrouleur de ceinture de sécurité

(30) Priorität: 06.09.2001 DE 10143759
(43) Veröffentlichungstag der Anmeldung: 12.03.2003
(73) Patentinhaber: TRW Automotive Electronics & Components GmbH & Co. KG, 78315 Radolfzell (DE)
(72) Erfinder: Peter, Cornelius, 77815 Bühl (DE)
(74) Vertreter: Degwert, Hartmut

(56) Entgegenhaltungen:
- EP-A- 1 074 439
- DE-A- 19 927 731
- DE-A- 19 940 034
- DE-C- 19 905 703

## Beschreibung

Die Erfindung betrifft einen Gurtaufroller nach dem Oberbegriff des Anspruchs 1.

Bei einem solchen Gurtaufroller, wie er aus der EP-A-1 074 439 bekannt ist, kann der Antriebsmotor die Aufrollfunktion übernehmen, die bei herkömmlichen Gurtaufrollern von einer Wickelfeder geleistet wird. Durch geeignete Ansteuerung des Antriebsmotors kann die Gurtkraft entsprechend dem Betriebszustand des Gurtaufrollers variiert werden. Im Anlegebereich wird die Gurtkraft reduziert, um den Tragekomfort zu erhöhen; im Aufrollbereich wird die Gurtkraft erhöht, um ein vollständiges Aufwickeln des Gurtbandes zu gewährleisten. Darüber hinaus kann der Antriebsmotor eine Vorstraffung des Gurtbandes durchführen, um eine eventuell erforderlich werdende Gurtbandstraffung durch einen pyrotechnischen Gurtstraffer vorzubereiten. Eine unmittelbare Notfall-Straffung allein durch den Antriebsmotor wurde bisher nicht in Betracht gezogen, weil mit verfügbarer Technik weder die erforderlichen hohen Gurtkräfte, noch die kurzen Ansprechzeiten realisierbar sind. So wird für die Gurtbandstraffung im allgemeinen gefordert, daß 120 mm Gurtlose in weniger als 30 ms eingezogen werden. Die üblicherweise eingesetzten pyrotechnischen Gurtstraffer entwickeln dafür Gurtkräfte von über 1000 N. Verfügbare Elektromotoren, die imstande wären, ähnlich hohe Kräfte aufzubringen, sind zu groß und zu schwer, um innerhalb der kurzen Zeitspanne von weniger als 30 ms die notwendige Drehzahl zu erreichen.

Durch die Erfindung wird ein Gurtaufroller mit elektrischem Antriebsmotor zur Verfügung gestellt, bei dem die Straffunktion allein durch den Antriebsmotor gewährleistet wird, ein gesonderter pyrotechnischer Strafferantrieb also entfallen kann. Bei dem erfindungsgemäßen Gurtaufroller ist der Antriebsmotor mit der Gurtspule über ein Untersetzungsgetriebe gekoppelt. Der Antriebsmotor ist ein bürstenloser Gleichstrommotor mit Innenläufer. Dieser Gleichstrommotor hat ein hohes Startmoment von 2 Nm oder mehr, insbesondere 2 bis 5 Nm oder wenig mehr. Die Erfindung beruht auf der Erkenntnis, daß mehrere Maßnahmen in Kombination erforderlich sind, um sowohl die kurze Ansprechzeit als auch die Gurtkraft zu gewährleisten. Zum einen muß der Rotor des Antriebsmotors ein geringes Trägheitsmoment aufweisen. Diese Forderung erfüllt ein bürstenloser Gleichstrommotor mit Innenläufer. Zwar haben Außenläufer prinzipiell ein besonders hohes Drehmoment, gleichzeitig aber auch ein hohes Trägheitsmoment. Zum anderen erlauben bürstenlose Gleichstrommotoren zumindest kurzzeitig extrem hohe Strombelastungen, so daß ein relativ großes Startmoment von mindestens 2 Nm ohne Schwierigkeiten realisiert werden kann. In Verbindung mit dem niedrigeren Trägheitsmoment gewährleistet das hohe Startmoment des Gleichstrommotors ein Hochlaufen auf mehrere tausend Umdrehungen pro Minute innerhalb von nur wenigen Millisekunden.

Einen weiteren Beitrag zu der hohen Straffleistung liefert das als Riementrieb ausgebildete Untersetzungsgetriebe mit einem Untersetzungsverhältnis von nur 1:3 bis 1:5. Ein solches Untersetzungsgetriebe zeichnet sich durch einen besonders hohen Wirkungsgrad von mindestens 90 % aus.

Um die erforderliche Stromstärke in den Statorwicklungen zu begrenzen, ist es vorteilhaft, den Gleichstrommotor an einer Fahrzeug-Bordspannung von 42 V zu betreiben.

Weitere Merkmale und Vorteile der Erfindung ergeben sich aus der folgenden Beschreibung und aus den beigefügten Zeichnungen, auf die bezug genommen wird. In den Zeichnungen zeigen:

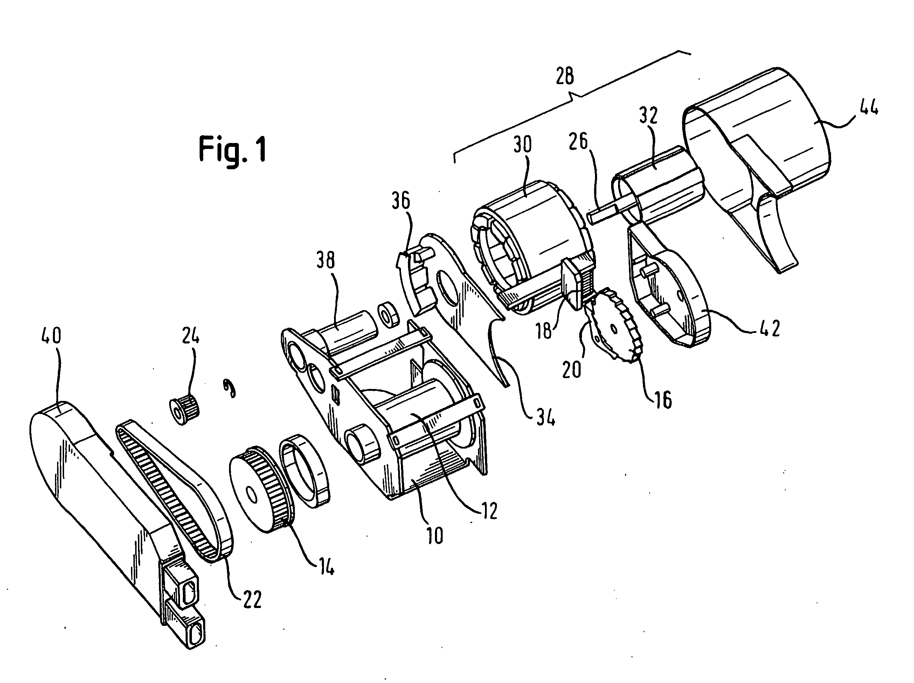

- Figur 1 den Gurtaufroller in Explo sionsdarstellung; und
- Figur 2 ein Diagramm, das die Kennlinien des verwendeten Gleichstrommotors darstellt.

Der Gurtaufroller hat eine in einem Rahmen 10 drehbar gelagerte Gurtspule 12. An einem der axialen Enden der Gurtspule 12 ist eine Zahnriemenscheibe 14 angeschlossen. An dem gegenüberliegenden axialen Ende der Gurtspule 12 ist eine mit einer Außenverzahnung versehene Sperrscheibe 16 angeschlossen, die mit einer durch einen Elektromagnet 18 betätigbaren Sperrklinke 20 zusammenwirkt. Die Zahnriemenscheibe 14 ist durch einen Zahnriemen 22 mit einem Ritzel 24 gekoppelt, das auf der Welle 26 eines allgemein mit 28 bezeichneten Gleichstrommotors befestigt ist. Der Gleichstrommotor 28 ist ein bürstenloser Innenläufer mit einem Stator 30 und einem Rotor 32, an dem die Welle 26 befestigt ist. Der Stator 30 ist auf einer Leiterplatte 34 aufgebaut, die seitlich an den Rahmen 10 angesetzt ist. Auf der Leiterplatte 34 sind Leistungshalbleiter 36 aufgebaut, die Bestandteil einer Ansteuerschaltung für den Gleichstrommotor 28 sind. Der Rotor 32 des Elektromotors 28 ist in einer Lagerbüchse 38 gelagert, die an einem Schenkel des Rahmens 10 befestigt ist.

Der durch die Zahnriemenscheibe 14, das Ritzel 24 und den Zahnriemen 22 gebildete Riementrieb bildet ein Untersetzungsgetriebe mit einem Untersetzungsverhältnis von 1:3 bis 1:5 und ist durch eine Haube 40 abgedeckt, die auf den benachbarten Schenkel des Rahmens 10 aufgesetzt ist.

Der durch die Sperrscheibe 16, die Sperrklinke 20 und den Elektromagnet 18 gebildete Blockiermechanismus ist durch eine Haube 42 abgedeckt, die auf den gegenüberliegenden Schenkel des Rahmens 10 aufgesetzt ist.

Schließlich ist auch der Elektromotor 28 durch eine Haube 44 abgedeckt, die über den Stator 30 geschoben und über der Leiterplatte 34 aufgesetzt ist.

Der Rotor 32 des Elektromotors 28 ist mit Seltenerd-Permanentmagneten ausgestattet. Er hat ein geringes Trägheitsmoment von vorzugsweise etwa 1,6 x 10⁻⁵ kgm² und ermöglicht ein schnelles Anlaufen mit einem hohen Startmoment von mindestens 2 Nm. Bei größerem Trägheitsmoment bis etwa 3,5 x 10⁻⁵ kgm² wird ein höheres Startmoment bis etwa 5 Nm benötigt. Der Stator 30 des Gleichstrommotors 28 ist vorzugsweise für eine Bordspannung von 42 V ausgelegt, so daß die für die benötigte Antriebsleistung erforderlichen Ströme in den Statorwicklungen in einer leicht beherrschbaren Größenordnung bleiben.

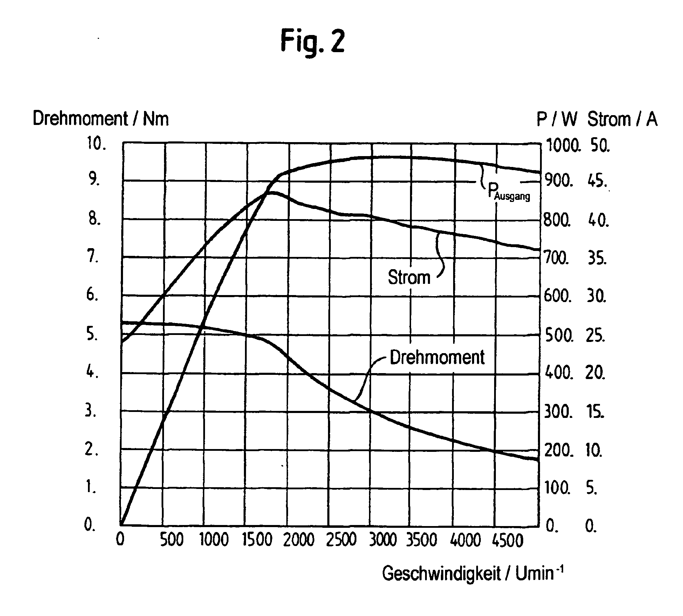

Die Kennlinien eines bei der bevorzugten Ausführungsform verwendeten bürstenlosen Gleichstrommotors mit Innenläufer sind in dem Diagramm der Figur 2 dargestellt. Das Diagramm zeigt das Antriebsmoment, den in die Statorwicklungen eingespeisten Strom und die aufgenommene elektrische Leistung in Abhängigkeit von der Drehzahl. Bemerkenswert ist besonders das hohe Startmoment von mehr als 5 Nm, das in Kombination mit dem geringen Trägheitsmoment des Rotors ein so schnelles Anlaufen des Antriebsmotors bei einer Gurtkraft von über 800 N ermöglicht, daß in weniger als 30 ms eine Gurtlose von 120 mm beseitigt werden kann. Die mit diesem Antriebskonzept realisierbaren Gurtkräfte sind zwar geringer als bei einem pyrotechnischen Strafferantrieb; im Gegensatz zu einem pyrotechnischen Strafferantrieb, bei dem ein pneumatischer Antriebsdruck sehr schnell aufgebaut wird, nach Erreichen des Maximums aber steil abfällt, bleibt das Antriebsmoment eines Elektromotors während des gesamten Vorgangs erhalten, so daß niedrigere Antriebskräfte ausreichen.

## Patentansprüche

1. Gurtaufroller mit einer in einem Rahmen drehbar gelagerten Gurtspule und einem über ein Untersetzungsgetriebe mit der Gurtspule gekoppelten Antriebsmotor, der als bürstenloser Gleichstrommotor ausgebildet ist, **dadurch gekennzeichnet, daß** der Antriebsmotor mit einem Innenläufer ausgestattet ist und ein Startmoment von mindestens 2 Nm aufweist.

2. Gurtaufroller nach Anspruch 1, **dadurch gekennzeichnet, daß** das Startmoment im Bereich von 2 bis 5 Nm oder wenig darüber liegt.

3. Gurtaufroller nach Anspruch 1 oder 2, **dadurch gekennzeichnet, daß** das Untersetzungsgetriebe durch einen Riementrieb mit einem Untersetzungsverhältnis von 1:3 bis 1:5 ausgebildet ist.

4. Gurtaufroller nach Anspruch 1, 2 oder 3, **dadurch gekennzeichnet, daß** der Gleichstrommotor an einer Fahrzeug-Bordspannung von 42 V betrieben wird.

5. Gurtaufroller nach einem der Ansprüche 1 bis 4, **dadurch gekennzeichnet, dass** der Rotor des Gleichstrommotors ein Trägheitsmoment im Bereich von 1,5 x 10⁻⁵ kgm² bis etwa 3,5 x 10⁻⁵ kgm² aufweist.

6. Gurtaufroller nach einem der Ansprüche 1 bis 5, **dadurch gekennzeichnet, daß** der Rotor des Gleichstrommotors mit Seltenerd-Permanentmagneten ausgestattet ist.

7. Gurtaufroller nach einem der Ansprüche 1 bis 6, **dadurch gekennzeichnet, daß** der Stator des Gleichstrommotors auf eine Leiterplatte aufgesetzt ist, die Leistungs-Halbleiter einer Ansteuerschaltung trägt und ihrerseits an einem Schenkel des Rahmens angesetzt ist.

## Claims

1. A belt retractor comprising a belt spool mounted rotatably in a frame and a drive motor which is coupled to the belt spool via a reduction gear and is in the form of a brushless direct current motor, **characterized in that** the drive motor is provided with an internal rotor and has a starting torque of at least 2 Nm.

2. The belt retractor according to claim 1, **characterized in that** the starting torque lies in the range of from 2 to 5 Nm or slightly above.

3. The belt retractor according to claim 1 or 2, **characterized in that** the reduction gear is made up of a belt drive with a reduction ratio of 1:3 to 1:5.

4. The belt retractor according to claim 1, 2 or 3, **characterized in that** the direct current motor is operated with an on-board vehicle voltage of 42 V.

5. The belt retractor according to any of claims 1 to 4, **characterized in that** the rotor of the direct current motor has a moment of inertia in the range of from 1.5 x 10⁻⁵ kgm² to about 3.5 x 10⁻⁵ kgm².

6. The belt retractor according to any of claims 1 to 5, **characterized in that** the rotor of the direct current motor is equipped with rare-earth permanent magnets.

7. The belt retractor according to any of claims 1 to 6, **characterized in that** the stator of the direct current motor is placed on a printed circuit board which mounts power semiconductors of an actuation circuit and, in turn, is applied to a leg of the frame.

## Revendications

1. Enrouleur de ceinture comportant une bobine de ceinture montée rotative dans un cadre et un moteur d'entraînement qui est réalisé sous forme de moteur à courant continu sans balais et accouplé à la bobine de ceinture via un démultiplicateur, **caractérisé en ce que** le moteur d'entraînement est à rotor intérieur et présente un couple de démarrage d'au moins 2 Nm.

2. Enrouleur de ceinture selon la revendication 1, **caractérisé en ce que** le couple de démarrage est de 2 à 5 Nm ou un peu au-dessus.

3. Enrouleur de ceinture selon la revendication 1 ou 2, **caractérisé en ce que** le démultiplicateur est réalisé par une transmission par courroie avec un rapport de démultiplication de 1:3 à 1:5.

4. Enrouleur de ceinture selon la revendication 1, 2 ou 3, **caractérisé en ce que** le moteur à courant continu fonctionne sur une tension de bord de véhicule de 42 V.

5. Enrouleur de ceinture selon l'une des revendications 1 à 4, **caractérisé en ce que** le rotor du moteur à courant continu présente un couple d'inertie dans la plage de 1,5 x 10⁻⁵ kgm² à approximativement 3,5 x 10⁻⁵ kgm².

6. Enrouleur de ceinture selon l'une des revendications 1 à 5, **caractérisé en ce que** le rotor du moteur à courant continu est équipé d'aimants permanents en terre rare.

7. Enrouleur de ceinture selon l'une des revendications 1a 6, **caractérisé en ce que** le stator du moteur à courant continu est placé sur une carte de circuits imprimés qui porte des semi-conducteurs de puissance d'un circuit de pilotage et qui est à son tour rapportée sur une branche du cadre.
